(19) Europäisches Patentamt / European Patent Office / Office européen des brevets

(11) **EP 4 275 070 B1**

(12) **EUROPEAN PATENT SPECIFICATION**

(45) Date of publication and mention
of the grant of the patent:
**26.11.2025 Bulletin 2025/48**

(21) Application number: **21717837.5**

(22) Date of filing: **08.04.2021**

(51) International Patent Classification (IPC):
*G01S 13/32* (2006.01)     *G01S 13/34* (2006.01)
*G01S 13/28* (2006.01)     *G01S 7/35* (2006.01)
*G01S 13/58* (2006.01)     *G01S 13/931* (2020.01)
*G01S 13/38* (2006.01)     *G01S 13/44* (2006.01)

(52) Cooperative Patent Classification (CPC):
**G01S 7/356; G01S 13/288; G01S 13/325;
G01S 13/343; G01S 13/38; G01S 13/584;
G01S 13/931;** G01S 13/28; G01S 13/4454;
G01S 13/582

(86) International application number:
**PCT/EP2021/059148**

(87) International publication number:
**WO 2022/214179 (13.10.2022 Gazette 2022/41)**

(54) **AUTOMOTIVE RADAR APPARATUS AND A METHOD FOR DETERMINING AN UNAMBIGUOUS RADIAL VELOCITY**

RADARVORRICHTUNG FÜR KRAFTFAHRZEUGE UND VERFAHREN ZUR BESTIMMUNG EINER EINDEUTIGEN RADIALGESCHWINDIGKEIT

APPAREIL RADAR AUTOMOBILE ET PROCÉDÉ DE DÉTERMINATION D'UNE VITESSE RADIALE NON AMBIGUË

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.11.2023 Bulletin 2023/46**

(73) Proprietor: **Shenzhen Yinwang Intelligent
Technologies Co., Ltd.
Shenzhen, Guangdong 518129 (CN)**

(72) Inventors:
• **PEREZ MONJAS, Alberto
80992 Munich (DE)**
• **TEJERO ALFAGEME, Simon
80992 Munich (DE)**
• **VASANELLI, Claudia
80992 Munich (DE)**
• **DUQUE BIARGE, Sergio
80992 Munich (DE)**

(74) Representative: **Maiwald GmbH
Engineering
Elisenhof
Elisenstrasse 3
80335 München (DE)**

(56) References cited:
**US-A1- 2004 150 552**

• **ROHLING HERMANN ET AL: "New radar
waveform based on a chirp sequence", 2014
INTERNATIONAL RADAR CONFERENCE, IEEE,
13 October 2014 (2014-10-13), pages 1 - 4,
XP032746301, DOI: 10.1109/
RADAR.2014.7060246**

- YUANKAI WANG ET AL: "Jittered chirp sequence waveform in combination with CS-based unambiguous Doppler processing for automotive frequency-modulated continuous wave radar", IET RADAR SONAR NAVIGATION, THE INSTITUTION OF ENGINEERING AND TECHNOLOGY, UK, vol. 11, no. 12, 10 October 2017 (2017-10-10), pages 1877 - 1885, XP006110359, ISSN: 1751-8784, DOI: 10.1049/IET-RSN.2017.0236

## Description

### TECHNICAL FIELD

The disclosure relates generally to an automotive radar, and more particularly the disclosure relates to a method of determining an unambiguous radial velocity in an automotive radar system.

### BACKGROUND

H. Rohling et al, "New radar waveform based on a chirp sequence", 2014 International Radar Conference, describes that for all radar applications it is required to measure the target range R and radial velocity v r simultaneously and unambiguously with high accuracy and resolution even in multi target situations. The authors described that in this paper, a new radar waveform is proposed, which is based on a chirp sequence, and that in the considered case, each chirp signal has a very short duration T chirp . It is described that therefore, the measured beat frequency f B is dominated by the target range R and is less influenced by the radial velocity v r . It is described that however, the classical chirp sequence waveform suffers from possible ambiguities in the velocity measurement. It is described that the objective of this paper to modify the classical chirp sequence based on an additional frequency modulation from chirp to chirp to get an unambiguous velocity measurement even in multi target situations.

Y. Wang et al, "Jittered chirp sequence waveform in combination with CS-based unambiguous Doppler processing for automative frequency-modulated continuous wave radar", describes that the chirp sequence waveform is one of the most commonly used waveforms for automotive frequency-modulated continuous wave radars. It is described that when a chirp sequence waveform is applied, the range-Doppler processing method based on two-dimensional fast Fourier transform can be used to extract the range and velocity parameters of multiple targets from the beat signals. However, conventional chirp sequence waveforms suffer from the Doppler ambiguity problem, which results in ambiguities in velocity measurement. It is described that in this study, the authors propose a novel jittered chirp sequence waveform. It is described that in the proposed waveform, the initial times of the chirps are randomly jittered. It is described that according to the compressed sensing theory, they establish the parameter design principle for the new waveform, and apply sparse recovery method to achieve unambiguous Doppler processing. It is described that subspace pursuit algorithm is recommended as the suitable sparse recovery method for Doppler processing due to its low complexity and stable recovery performance.

US2004/150552A1 describes a method for processing pulsed-Doppler radar signals to detect a target includes transmitting radar signals from a radar system according to a predetermined frequency technique including signals having frequency diversity, receiving signals within a frequency band, including a target return signal having a frequency indicative of the velocity of the target, and transforming the target return signal using a Fourier Transform having a variable frequency scale.

Automotive radar is a sensor system to detect targets and estimate their position. The position of the targets is estimated in terms of range, angle, and the radial velocity is estimated with respect to a host vehicle. For example, in car manufacturing, the radial velocity of the targets is estimated based on resolution and a certain unambiguous span of the velocity of the sensor system. If a target's velocity is outside the certain unambiguous span of velocity, the observed velocity sensed by the sensor system would be a wrapped version based on the velocity and the certain unambiguous span of the velocity of the sensor system. For example, if the sensor system has an unambiguous span of the velocity that goes from -50 kilometer per hour (km/h) to +50 km/h and if the relative velocity of the target is 100 km/h, the observed velocity sensed by the sensor system is 0 km/h. In practice, to cover the required unambiguous span of the velocity with the required velocity, the resolution of the sensor system may require a lot of memory, which is unfeasible for automotive products.

Existing approaches enhance the certain unambiguous span of the radial velocity of the sensor system using a waveform with a train of chirps that present an interleaved frequency shift. The odd and even chirps are processed separately and the phase difference for detected targets is linked to the number of wrapped cycles, which results in a signal to noise ratio (SNR) loss of about 3 decibels (dB). This implies a chance of missing some weak targets, for example, pedestrians, especially in automotive radar system.

Further, some existing approaches use a different waveform between scans. However, the existing approaches have to match the velocity of the targets between scans. The targets may appear and disappear between the scans due to noise or scattering properties. Also, in a dense point cloud, there is a problem of matching the same target between different scans. For estimating the right velocity of the target, the sensor system requires at least two or three scans, thereby latency is introduced in the sensor system. The time due to latency may be critical, especially in safety functions for automotive, for example, emergency braking.

The existing approaches provide phase difference quality to determine the number of cycles that depend only on a single channel. Thereby, estimation of the unambiguous velocity may not be robust enough over multiple channels.

Further, the estimation quality is not assessed using any processing procedures such as tracker or classification.

Therefore, there arises a need to address the aforementioned technical drawbacks in existing systems or technologies in determining an unambiguous radial velocity.

## SUMMARY

It is an object of the disclosure to provide an automotive radar apparatus and a method of determining an unambiguous radial velocity in an automotive radar system while avoiding one or more disadvantages of prior art approaches.

This object is achieved by the features of the independent claims. Further implementation forms are apparent from the dependent claims, the description, and the figures.

The disclosure provides an automotive radar apparatus and a method of determining an unambiguous radial velocity in an automotive radar system.

According to a first aspect, there is provided an automotive radar apparatus according to claim 1.

The automotive radar apparatus improves target velocity estimation on a single radar scan, thereby reducing network latency especially in safety features of automotive such as emergency braking. The automotive radar apparatus estimates target velocity in a single scan over multiple channels, thereby enhancing robustness of the automotive radar apparatus. The automotive radar apparatus estimates target velocity without a signal-noise ratio (SNR) loss, thereby improving the phase quality. The automotive radar apparatus incorporates flexibility in waveform design and on a received signal recording. The automotive radar apparatus may detect possible errors during target velocity estimation and maintains a tracker for the possible errors.

The automotive radar apparatus may detect one or more targets using the sum matrix or the difference matrix using full processing gain. The automotive radar apparatus may estimate unambiguous velocity for the detected targets by analyzing the interferometric phase for a large number of channels, thereby increasing robustness in estimating unambiguous velocity.

The first phase differences may also be known as an interferometric phase. The interferometric phase is calculated for each moving target and each channel. The phase compensation with residue is derived for each channel and averaged. Thereby, the phase quality becomes equivalent to the coherent gain of all available channels. Hence, the automotive radar apparatus is robust to unambiguous velocity estimation.

Optionally, the signal processing unit is further configured to detect a plurality of targets based on the calculated sum matrix or difference matrix. The first phase differences are determined for each target and averaged across a plurality of channels. The signal processing unit is further configured to estimate a direction of arrival for each detected target. The signal processing unit may estimate unambiguous velocity for one or more detected targets by analyzing the interferometric phase over a large number of channels, thereby increasing robustness in estimating unambiguous velocity over a large number of channels and reducing network latency.

Optionally, the signal processing unit is further configured to estimate a direction of arrival based on the calculated sum matrix and difference matrix using all channels. The signal processing unit is further configured to detect a plurality of targets based on the direction of arrival estimated using the sum matrix or the difference matrix. If the direction of arrival (DoA) estimation for the detected target takes place easily, then, the phase quality improves with zero SNR loss.

Optionally, a potential error indication flag is raised based on a value of the second phase difference. The possibility of detecting errors in determining radial velocity may be estimated and may be recorded in a tracker.

According to a second aspect, there is provided a method of determining an unambiguous radial velocity in an automotive radar system according to claim 5.

The method estimates target velocity without an SNR loss, thereby improving the phase quality. The method in an automotive radar system improves target velocity estimation on a single radar scan, thereby reducing network latency especially in safety features of automotive such as emergency braking. The method estimates target velocity in a single scan over multiple channels, thereby enhancing robustness of the automotive radar apparatus. The method incorporates flexibility in waveform design and on a received signal recording. The method may detect possible errors during target velocity estimation and maintains a tracker for the possible errors.

Optionally, the method further includes detecting a plurality of targets based on the calculated sum matrix or difference matrix. The first phase differences are determined for each target and averaged across a plurality of channels. The method optionally includes estimating a direction of arrival for each detected target. The method can enhance the estimation of the unambiguous velocity in a single scan without impacting memory needs.

Optionally, the method further includes estimating a direction of arrival based on the calculated sum matrix and difference matrix using all channels. The method optionally includes detecting a plurality of targets based on the direction of arrival estimated using the sum matrix or the difference matrix. Optionally, a potential error indication flag is raised based on a value of the second phase difference.

According to a third aspect, there is provided a computer-readable medium that includes instructions which, when executed by a processor, cause the processor to perform the method.

A technical problem in the prior art is resolved, where the technical problem concerns lack of efficiency unambiguous velocity estimation, lack of chirp transmission flexibility and lack of received chirp recording flexibility, and presence of signal to noise ratio loss, estimation is not robust to multiple channels.

Therefore, in contradistinction to the prior art, according to the automotive radar apparatus, and the method for determining an unambiguous radial velocity in the automotive radar system, the estimation of the unambiguous velocity in a single scan is enhanced without impacting memory needs. The automotive radar apparatus excludes signal to noise ratio (SNR) loss, thereby the processing of the data becomes easy and weak targets are also detected easily. Thus, an efficient way of estimating unambiguous velocity is implemented by the automotive radar system over multiple available channels due to its robust nature. The automotive radar apparatus can be used to identify possible wrong velocity estimation, thereby improving the efficiency of the automotive radar system. Thus, computational costs can be minimal and effective.

These and other aspects of the disclosure will be apparent from and the implementation(s) described below.

## BRIEF DESCRIPTION OF DRAWINGS

Implementations of the disclosure will now be described, by way of example only, with reference to the accompanying drawings, in which:

FIG. 1 is a block diagram of an automotive radar apparatus in accordance with an implementation of the disclosure;

FIG. 2 is a graphical illustration that illustrates an exemplary sequence of frequency-ramped chirps that represents relevant time parameters with a same frequency-ramping slope in accordance with an implementation of the disclosure;

FIG. 3 is a graphical illustration that illustrates an exemplary sequence of frequency-ramped chirps that represents relevant time parameters with a different frequency-ramping slope in accordance with an implementation of the disclosure;

FIG. 4 is a graphical illustration that illustrates an exemplary comparison plot of phase and phase residues for moving target at different Doppler velocities in accordance with an implementation of the disclosure;

FIG. 5 is an exemplary representation of a Doppler enhancement factor as a sector for the automotive radar apparatus in accordance with an implementation of the disclosure;

FIG. 6 is a graphical illustration that illustrates an exemplary comparison plot of estimated unwrapped velocity and a ground truth velocity of the automotive radar apparatus in accordance with an implementation of the disclosure;

FIG. 7 is a flow diagram that illustrates a method for determining an unambiguous radial velocity before detection of direction of arrival in an automotive radar system in accordance with an implementation of the disclosure;

FIG. 8 is a flow diagram that illustrates a method for determining an unambiguous radial velocity after detection of direction of arrival in an automotive radar system in accordance with an implementation of the disclosure; and

FIGS. 9A-9D are flow diagrams that illustrate a method for determining an unambiguous radial velocity in an automotive radar system in accordance with an implementation of the disclosure.

## DETAILED DESCRIPTION OF THE DRAWINGS

Implementations of the disclosure provide an automotive radar apparatus and a method of determining an unambiguous radial velocity in an automotive radar system. The automotive radar apparatus may be a frequency modulated continuous wave radar. To make solutions of the disclosure more comprehensible for a person skilled in the art, the following implementations of the disclosure are described with reference to the accompanying drawings.

Terms such as "a first", "a second", "a third", and "a fourth" (if any) in the summary, claims, and foregoing accompanying drawings of the disclosure are used to distinguish between similar objects and are not necessarily used to describe a specific sequence or order. It should be understood that the terms so used are interchangeable under appropriate circumstances, so that the implementations of the disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

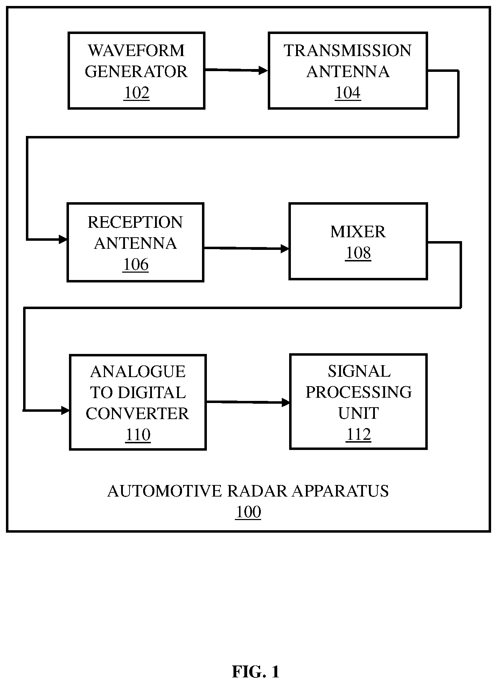

FIG. 1 is a block diagram of an automotive radar apparatus **100** in accordance with an implementation of the disclosure. The automotive radar apparatus **100** includes a waveform generator **102,** a transmission antenna **104,** a reception antenna **106,** a mixer **108,** an analogue to digital converter, ADC, **110,** and a signal processing unit **112.** The waveform generator **102** is configured to generate a transmission signal including a sequence of frequency-ramped chirps. The sequence of chirps includes a first time series of chirps interleaved with a second time series of chirps. The transmission antenna **104** is configured to emit a radio wave in response to being driven by the transmission signal. The reception antenna **106** is configured to generate a reception signal in response to receiving a reflected radio wave. The mixer **108** is configured to generate an intermediate frequency, IF, signal by mixing the transmission signal with the reception signal. The analogue to digital converter, ADC, **110** is configured to generate samples of the IF signal, by sampling the IF signal within each time window of a sequence of time windows associated with the sequence of chirps. The time windows have equidistant midpoints. The signal processing unit **112** is configured to calculate a range profile by applying a Fourier transform to the samples for each time window. The signal processing unit **112** is configured to calculate a matrix of ambiguous radial velocities by applying a Fourier transform across range profiles. The matrix of ambiguous radial velocities includes a first sub-matrix and a second sub-matrix corresponding respectively to lower and upper velocities. The signal processing unit **112** is configured to calculate a sum matrix and a difference matrix. The sum matrix and the difference matrix are a sum and a difference of the first and the second sub-matrix, respectively. The signal processing unit **112** is configured to determine a matrix of first phase differences between elements of the sum matrix and elements of the difference matrix. The signal processing unit **112** is configured to determine a matrix of second phase differences between elements of the matrix of first phase differences and a phase component depending on the measured range position and an ambiguous measured velocity, such that the second phase difference is a function depending only on a cycle index for each position. The signal processing unit **112** is configured to determine a cycle index $n_{cyc}(I',J')$ for each position of the ambiguous radial velocity. The signal processing unit **112** is configured to calculate an unambiguous radial velocity based on the ambiguous radial velocity and the cycle index.

The automotive radar apparatus **100** improves target velocity estimation on a single radar scan, thereby network latency reduces, especially in safety features of automotive such as emergency braking. The automotive radar apparatus **100** estimates target velocity in a single scan over multiple channels thereby enhancing robustness of the apparatus is very high. The automotive radar apparatus **100** estimates target velocity without an SNR loss, thereby improving the phase quality. The automotive radar apparatus **100** incorporates flexibility in waveform design and on a received signal recording. The automotive radar apparatus **100** may detect possible errors in estimation and maintains a tracker for the possible errors.

The analogue to digital converter, ADC, **110** is configured to generate samples $RxTime(i,j)$ of the IF signal, i=1,...N, j=1,...M, by sampling the IF signal within each time window W(i) of the sequence of time windows, $RxTime(i,j)$ being the j-th sample in the i-th time window.

Index i in the $RxTime(i,j)$ of the IF signal indicates i-th chirp, row i is recorded data for each transmitted chirp within its time recording window and the columns of the corresponding samples to its specific time window. The i-th index is also known as slow time dimension.

Index j in the $RxTime(i,j)$ of the IF signal indicates j-th acquisition window that corresponds to recorded sample within each specific acquisition window. The j-th index is also known as fast time dimension.

The signal processing unit **112** is configured to calculate the range profile by, for each i from 1 to N, calculating a range profile $Range\_SlowTime(i,J)$, J=1,...,M, by applying a Fourier transform to the samples $RxTime(i,j)$, j=1,...,M. Optionally, the signal processing unit **112** is configured to calculate ambiguous radial velocities by, for each J from 1 to M, calculating a matrix $RgVel(I,J)$, I=**1**,...,N, by applying the Fourier transform to the range profile $Range\_SlowTime(i,J)$, i=1,...,N. The first sub-matrix $RgVel_{S1}(I',J') = RgVel(I',J')$, I'=1,...,N/2, J'=1,...,M, and the second sub-matrix

$$RgVel_{S2}(I',J') = RgVel\left(I' + \frac{N}{2},J'\right), \text{ I'=1,...,N/2, J'=1,...,M. The Fourier transform to the range profile may also calculate}$$

a spectrum, that is a range of frequencies. The spectrum may include two peaks $(P_1, P_2)$. The values of $P_1, P_2$ may be obtained by the following equations,

$$P_1 = A \cdot \left(1 + e^{j\phi(n,V_m,R_m)}\right)$$

$$P_2 = A \cdot \left(1 - e^{j\phi(n,V_m,R_m)}\right)$$

where n is a number of ambiguous cycles, $V_m$ is a measured velocity, $R_m$ is a measured range. The signal processing unit **112** divides the spectrum into a first sub-spectrum, and a second sub-spectrum. The first sub-spectrum and the second sub-spectrum may be two sub-apertures in a Doppler domain. The first sub-spectrum may include from -0.25 to 0.25 ambiguous radial velocities. The second spectrum may include the rest of the spectrum. The signal processing unit **112** may calculate a sum peak ($P_1 + P_2$) and a difference peak ($P_1 - P_2$) of a first peak of the spectrum and a second peak of the spectrum. A phase difference between the sum peak and the difference peak includes information about the number of ambiguity cycles. The following equation represents the phase difference between the sum peak and the difference peak:

$$\angle((P_1 - P_2) \cdot (P_1 + P_2)^*) = \phi(n, V_m, R_m)$$

The phase difference depends on the number of cycles (n), measured range ($R_m$), and measured velocity ($V_m$) of a moving target. After the removal of a phase component that relates to the measured range and velocity of the moving target, a remaining phase is linked to the number of cycles with respect to an unambiguous velocity span.

The signal processing unit **112** is configured to calculate the sum matrix $RgVel_{SUM}$ and the difference matrix $RgVel_{DIFF}$ such that:

$$RgVel_{SUM}(I',J') = RgVel_{S1}(I',J') + RgVel_{S2}(I',J')$$

and

$$RgVel_{DIFF}(I',J') = RgVel_{S1}(I',J') - RgVel_{S2}(I',J'), \text{ I'=1,...,N/2, J'=1,...,M.}$$

The automotive radar apparatus **100** may detect one or more targets using the sum matrix or the difference matrix using full processing gain. The automotive radar apparatus **100** may estimate unambiguous velocity for the detected targets by analyzing the interferometric phase for a large number of channels, thereby increasing robustness in estimating unambiguous velocity.

The signal processing unit **112** is configured to determine the first phase differences $Phase(I',J')$, I'=1,...,N/2, J'=1,...,M, first phase difference $Phase(I',J')$ being a phase difference between element $RgVel_{SUM}(I',J')$ of the sum matrix and element $RgVel_{DIFF}(I',J')$ of the difference matrix. Optionally, the signal processing unit **112** is configured to determine the second phase differences $Phase_{VelCyIce}(I',J') = Phase(I',J') - Phase_{known}(I',J')$, I'=1,...,N/2, J'=1,...,M, $Phase_{known}(I',J')$ is the phase component depending on the measured range position and the ambiguous measured velocity, such that $Phase_{known}(I',J')$ is a function of I' and J', $Phase_{known}(I',J') = f(I',J')$, and the second phase difference is a function $Phase_{VelCyIce}(I',J') = f(n_{cyc}(I',J'))$ depending only on the cycle index $n_{cyc}(I',J')$ for each I' J' position.

The first phase difference is defined as $Phase(I',J') = \angle(RgVel_{SUM}(I',J') * RgVel_{DIFF}(I',J'))$, being $\angle$ the angle operator, * the complex product operator and the conjugate operator. Using matrix notation: $Phase = \angle(RgVel_{SUM} \odot RgVel_{DIFF})$, being $\angle$ the angle operator, $\odot$ the Hadamard product and the conjugate operator.

The second phase difference cleans the phase component from the known terms that depend on $Rg$ and ambiguous velocity that is directly linked to the I' and J' indices. Thereby, the resulting phase depends only on the required unknown parameter of the cycle index.

Optionally, the signal processing unit **112** is further configured to detect one or more targets based on the calculated sum matrix or difference matrix. The first phase differences are determined for each target and averaged across one or more channels. Optionally, the signal processing unit **112** is further configured to estimate a direction of arrival for each detected target. The signal processing unit **112** may estimate unambiguous velocity for one or more detected targets by analyzing the interferometric phase over a large number of channels, thereby increasing robustness in estimating unambiguous velocity over a large number of channels and reducing network latency.

Optionally, the signal processing unit **112** is further configured to estimate a direction of arrival based on the calculated sum matrix and difference matrix using all channels. The signal processing unit **112** may be configured to detect one or more targets based on the direction of arrival estimated using the sum matrix or the difference matrix. If the direction of arrival (DoA) estimation for the detected target takes place easily, then, the phase quality improves with zero SNR loss. The one or more targets may be detected by estimating all sum matrices or difference matrices. The unambiguous radial velocity is estimated using a phase difference between DoA from a sum of the sub-matrices (i.e. velocity sub-matrices) and the DoA from the difference between the sub-matrices.

The first phase differences may also be known as an interferometric phase. The interferometric phase is calculated for each moving target and each channel. The phase compensation with residue is derived for each channel and averaged. Thereby, the phase quality becomes equivalent to the coherent gain of all channels. Hence, the automotive radar apparatus **100** is robust to unambiguous velocity estimation for all channels. Also, the direction of arrival (DoA) estimation for the detected target takes place. Optionally, the value of the second phase difference may be used to raise a potential error indication flag. The automotive radar apparatus **100** can enhance the estimation of the unambiguous velocity in a single scan without impacting memory needs.

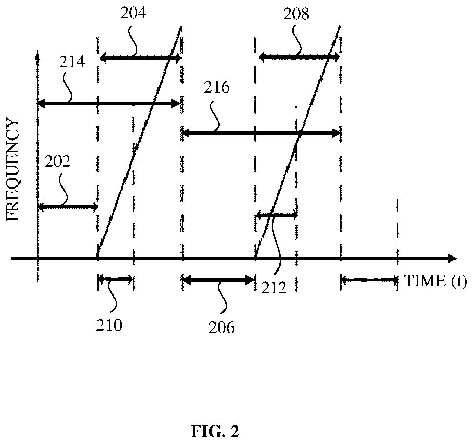

FIG. 2 is a graphical illustration that illustrates an exemplary sequence of frequency-ramped chirps that represents relevant time parameters with a same frequency-ramping slope in accordance with an implementation of the disclosure. The graphical illustration depicts a frequency of the frequency-ramped chirps on a Y-axis and a time (t) of the frequency-ramped chirps on an X-axis. The graphical illustration depicts an idle time ($t_{ID_A}$) of a first time series of chirps 214 at 202. The graphical illustration depicts a ramp time ($t_{ramp_A}$) of the first time series of chirps 214 at 204. The graphical illustration depicts an idle time ($t_{ID_B}$) of a second time series of chirps 216 at 206. The graphical illustration of the exemplary comparison plot depicts a ramp time ($t_{ramp_B}$) of the second time series of chirps 216 at 208. The graphical illustration of the exemplary comparison plot depicts an ADC time ($t_{ADC_A} = t_{mid_A}$) of the first time series of chirps at 210. The ADC time of the first time series of chirps 214 may be a time taken for a midpoint of a ramp in the first time series of chirps 214. The graphical illustration depicts an ADC time ($T_{ADC_B} = t_{mid_B}$) of the second time series of chirps 216 at 212. The ADC time of the second time series of chirps 216 may be a time taken for the midpoint of a ramp in the second time series of chirps 216.

In a first of two alternatives according to the invention, the frequency-ramping slope is the same for the first time series of chirps 214 and the second time series of chirps 216. The ramp time for the first and second time series, and an idle time between chirps are adjusted such that windows sampled by an ADC from the first time series of chirps 214 include a different center frequency to the windows sampled from the second time series of chirps 216.

The first time series of chirps 214 and the second time series of chirps 216 may be interleaved. A frequency shift may be introduced for the first time series of chirps 214 and the second time series of chirps 216 during sample recording. The time between the sample recording middle points may be always same for the first time series of chirps 214 and the second time series of chirps 216 that is ($\Delta t_{mid_{AB}} = \Delta t_{mid_{BA}}$). Thus, the following equation holds for the same frequency-ramping slope:

$$t_{ramp_A} - t_{ADC_A} + t_{ID_B} + t_{ADC_B} = t_{ramp_B} - t_{ADC_B} + t_{ID_A} + t_{ADC_A}$$

Based on the relevant time parameters, Doppler Enhancement factor with respect to original unambiguous Doppler span ($DE_f$) may be given as follows:

$$DE_f = \frac{\Delta t_{mid_{AB}}}{2 \cdot \left| t_{ADC_B} - t_{ADC_A} \right|}$$

For example, with an enhancing factor of 5.5, the first time series of chirps 214 may have $t_{ramp_A} = 58\mu s$, $t_{ID_A} = 8\mu s$, $t_{ADC_A} = 4\mu s$, and the second time series of chirps 216 may have $t_{ramp_B} = 64\mu s$, $t_{ID_B} = 2\mu s$, $t_{ADC_B} = 10\mu s$.

For example, if a pulse repetition interval (PRI) of the automotive radar apparatus is 66 $\mu$s, with a carrier frequency of 76.5 Giga Hertz (GHz) gives a total velocity span of 106.9 km/h. The enhanced unambiguous span with this configuration may be 587.8 kilometer per hour (km/h).

In an exemplary scenario, the two ramps may have the same duration, $t_{ramp_A} = t_{ramp_B}$ then, the previous equation is simplified to:

$$2 \cdot (t_{ADC_B} - t_{ADC_A}) = t_{ID_A} - t_{ID_B}$$

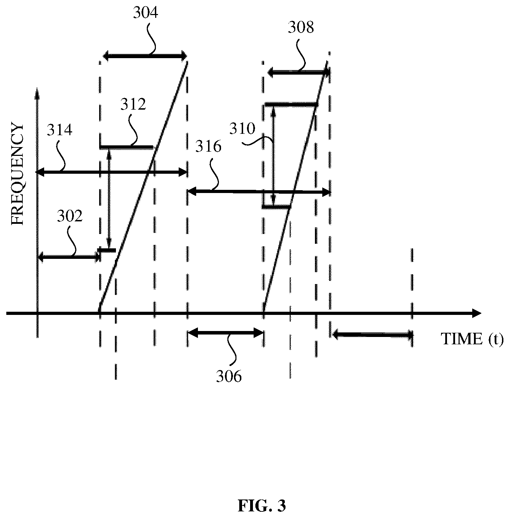

FIG. 3 is a graphical illustration that illustrates an exemplary sequence of frequency-ramped chirps that represents relevant time parameters with a different frequency-ramping slope in accordance with an implementation of the disclosure. The graphical illustration depicts a frequency of frequency-ramped chirps on a Y-axis and a time (t) of the frequency-ramped chirps on an X-axis. The graphical illustration depicts an idle time ($t_{ID_A}$) of a first time series of chirps 314 at 302. The graphical illustration depicts a ramp time ($t_{ramp_A}$) of the first time series of chirps 314 at 304. The graphical illustration depicts an idle time ($T_{ID_B}$) of a second time series of chirps 316 at 306. The graphical illustration depicts a ramp time ($t_{ramp_B}$) of the second time series of chirps 316 at 308. The graphical illustration depicts a bandwidth ($Bw_A$) of the first time series of chirps 314 at 310. The graphical illustration depicts a bandwidth ($Bw_B$) of the second time series of chirps 316 at 312. The first time series of chirps 314 and the second time series of chirps 316 may be interleaved. A frequency shift may be introduced for the first time series of chirps 314 and the second time series of chirps 316 during sample recording.

In a second one of the two alternatives according to the invention, the frequency-ramping slope is different for the first time series of chirps 314 and the second time series of chirps 316, such that windows sampled by the ADC from the first time series of chirps 314 include a different center frequency to the windows sampled from the second time series of chirps 316, and where a size of the windows sampled by the ADC is adjusted such that a constant bandwidth is sampled. The time between the sample recording middle points may be always same for the first time series of chirps 314 and the second time series of chirps 316 that is ($\Delta t_{mid_{AB}} = \Delta t_{mid_{BA}}$).

In an exemplary scenario, the first time series of chirps 314 may have a slope $k_A$, and the second time series of chirps may have a slope $k_B$. The recording times can be defined for the first time series of chirps 314 and the second time series of chirps **316** as $t_{REC_A} = \frac{N_{Rg}}{fs_A}$, $t_{REC_B} = \frac{N_{Rg}}{fs_B}$, where $N_{Rg}$ is the number of range samples, and $fs_A fs_B$ are the sampling frequencies for the first time series of chirps **314** and the second time series of chirps **316** respectively. Thereby, for the first time series of chirps **314** and the second time series of chirps **316** with different frequency-ramping slope the following equation applies,

$$2 \cdot \left(t_{ADC_B} - t_{ADC_A}\right) + N_{Rg} \cdot \left(\frac{1}{fs_B} - \frac{1}{fs_A}\right) = t_{ramp_B} - t_{ramp_A} + t_{ID_A} - t_{ID_B}$$

For example, for the first time series of chirps if $t_{ramp_A} = 7\mu s$, $t_{ID_A} = 3\mu s$, $t_{ADC_A} = 2\mu s$, $k_A = 50 \frac{MHz}{\mu s}$, $fs_A = 20MHz$, then $N_{Rg}$ = 128, $t_{REC_A}$ = 6.4$\mu s$ and for the second time series of chirps, if $t_{ramp_B}$ = 6$\mu s$, $t_{ID_B}$ = 3.28$\mu s$, $t_{ADC_B}$ = 2$\mu s$, $k_B = 62.5 \frac{MHz}{\mu s}$, $fs_B$ = 25$MHz$ then $N_{Rg}$ = 128, $t_{REC_B}$ = 5.12$\mu s$. Both recordings cover a bandwidth of 320 MHz, yielding in a range resolution of 46.8 cm.

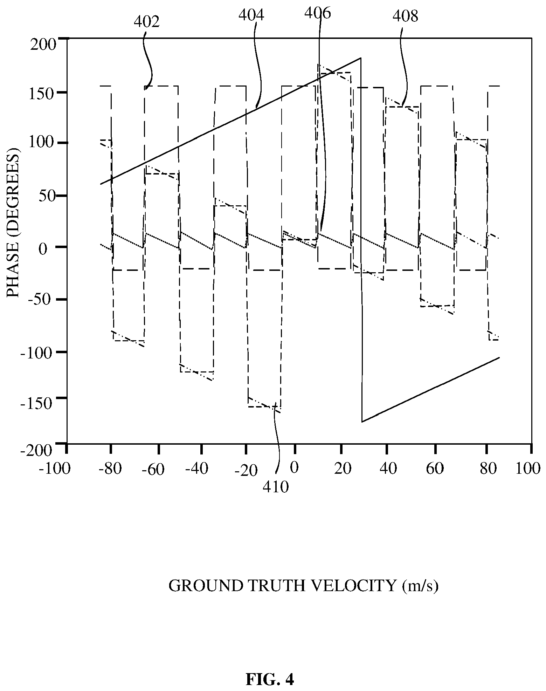

FIG. 4 is a graphical illustration that illustrates an exemplary comparison plot of phase and phase residues for moving targets at different Doppler velocities in accordance with an implementation of the disclosure. The graphical illustration depicts an original interferometric phase for the moving targets at **402**. The graphical illustration depicts a phase estimation for the moving targets according to its estimated range position at **404**. The graphical illustration depicts a Doppler velocity phase estimation for the moving targets at **406**. The graphical illustration depicts a phase compensation and a Doppler velocity phase compensation for the moving targets according to its estimated range position at **408**. Optionally, a phase difference depends on a number of cycles, measured range, and velocity of the moving targets. Thereby, after removing phase component related to the measured range and velocity of the moving targets, the remaining phase may be linked to the number of cycles with respect to unambiguous velocity span. The graphical illustration depicts a phase compensation for the moving targets according to its estimated range and the Doppler velocity at **410**. The phase compensation for the moving targets may fall within certain values based on the unambiguous velocity enhancing factor. The unambiguous velocity enhancing factor may be considered in waveform designing.

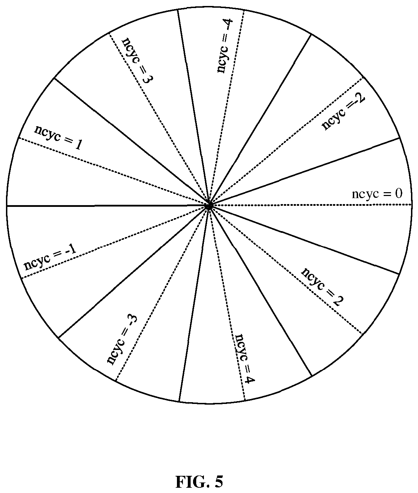

FIG. 5 is an exemplary representation of a Doppler enhancement factor as a sector for an automotive radar apparatus in accordance with an implementation of the disclosure. The exemplary representation of the circle is divided into sectors with the Doppler enhancement factor of 4.5. The number of cycles ($n_{cyc}$) may be from -4 to 4. Each sector in the exemplary representation depicts the number of cycles. The exemplary representation depicts the number of cycles that may not set in a cyclic order, thereby, a phase noise may produce a jump from one sector to another.

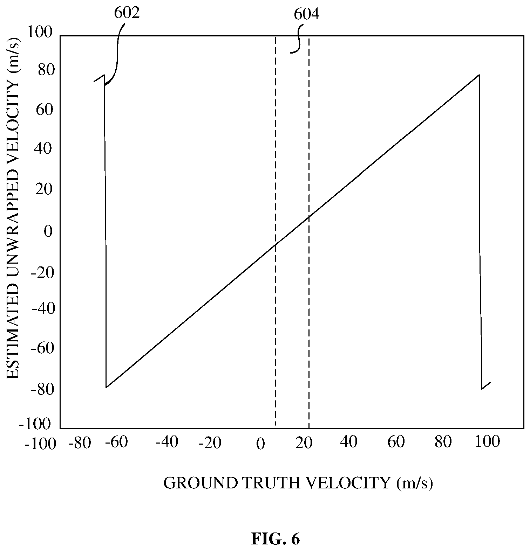

FIG. 6 is a graphical illustration that illustrates an exemplary comparison plot of estimated unwrapped velocity and a ground truth velocity of an automotive radar apparatus in accordance with an implementation of the disclosure. The graphical illustration depicts the estimated unwrapped velocity of the automotive radar apparatus on a Y-axis and the ground truth velocity of the automotive radar apparatus on an X-axis. The graphical illustration depicts an estimated velocity of the automotive radar apparatus at **602**, and an unambiguous region at **604**.

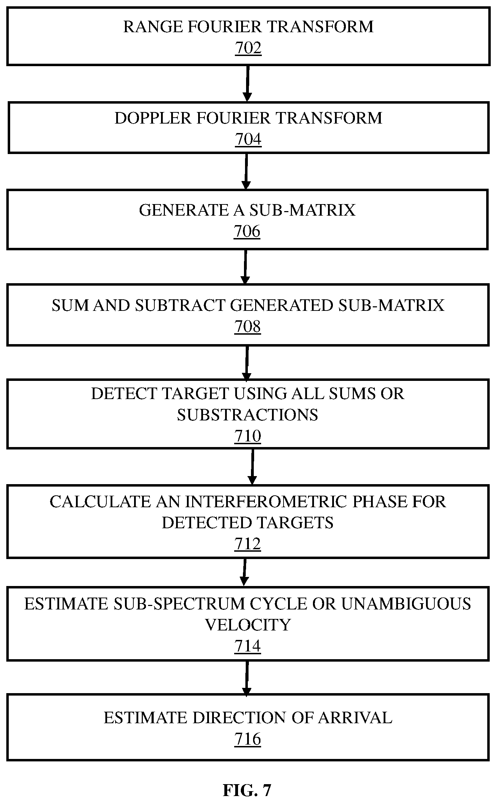

FIG. 7 is a flow diagram that illustrates a method for determining an unambiguous radial velocity before the detection of direction of arrival in an automotive radar system in accordance with an implementation of the disclosure. At a step **702**, a range profile is calculated by applying a Fourier transform to the samples for each time window. At a step **704**, a Doppler profile is calculated by applying the Fourier transform for the one or more targets. At a step **706**, upper and lower velocity sub-matrices are generated. At a step **708**, the generated sub-matrices are summed and subtracted. A sum matrix and a difference matrix are calculated. The sum matrix and the difference matrix are a sum and a difference of a first and a second sub-matrix, respectively corresponding to lower and upper velocities. At a step **710**, the one or more targets are detected using all sums or subtractions of the sub-matrix. At a step **712**, an interferometric phase is calculated using all channels for the detected targets. At a step **714**, a sub-spectrum cycle or an unambiguous radial velocity is calculated based on the ambiguous radial velocity and the cycle index. At a step **716**, a direction of arrival, DOA, is estimated for the detected targets. The method derives residual phase for every channel and averaged, thereby the phase quality is equivalent to beamform all the channels, and hence enhancing robustness of estimation of unambiguous velocity of the automotive radar apparatus.

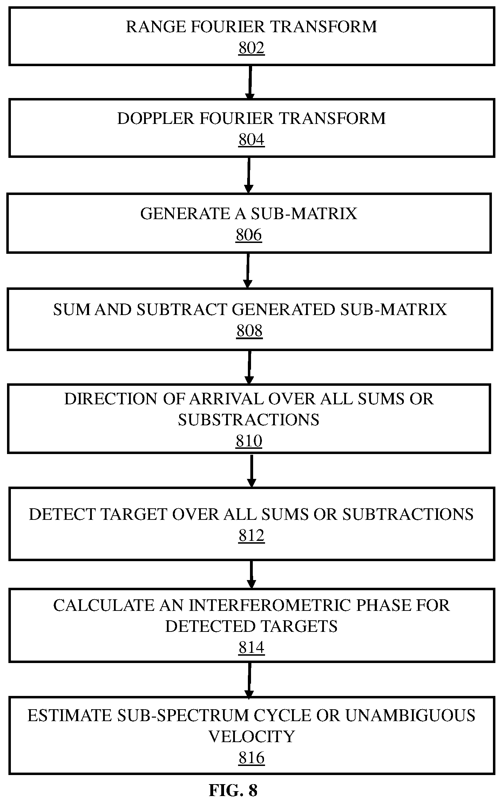

FIG. 8 is a flow diagram that illustrates a method for determining an unambiguous radial velocity after the detection of direction of arrival in an automotive radar system in accordance with an implementation of the disclosure. At a step **802**, a range profile is calculated by applying a Fourier transform to the samples for each time window. At a step **804**, a Doppler profile is calculated by applying the Fourier transform for the one or more targets. At a step **806**, upper and lower velocity sub-matrices are generated. At a step **808**, the generated sub-matrices are summed and subtracted. A sum matrix and a difference matrix are calculated. The sum matrix and the difference matrix are a sum and a difference of a first and a second sub-matrix, respectively corresponding to lower and upper velocities. At a step **810**, a direction of arrival, DOA, a is estimated based on the calculated sum matrix using all channels and a DOA is estimated based on the calculated difference matrix using all channels. At a step **812,** the one or more targets are detected based on the DOA estimated using the sum matrix or the difference matrix. At a step **814,** an interferometric phase is calculated using all channels for the detected targets. At a step **816,** a sub-spectrum cycle or unambiguous velocity is estimated for the detected targets. The method estimates target velocity in a single scan over multiple channels, thereby enhancing robustness of estimation of unambiguous velocity of the automotive radar system.

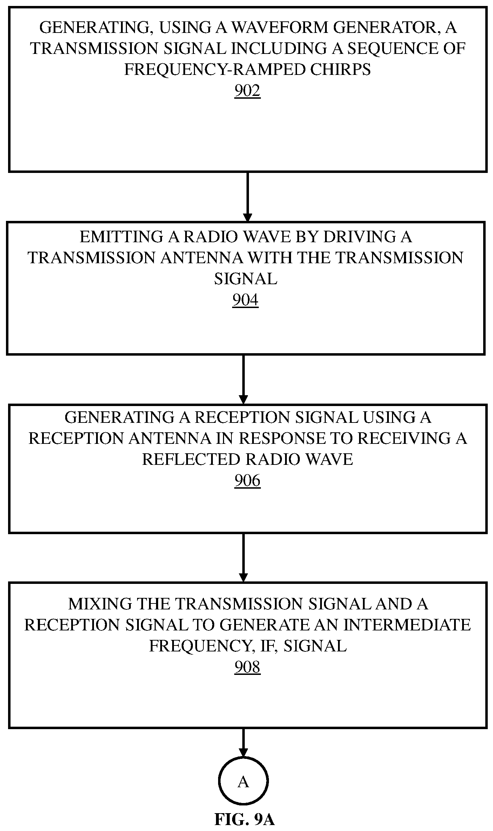

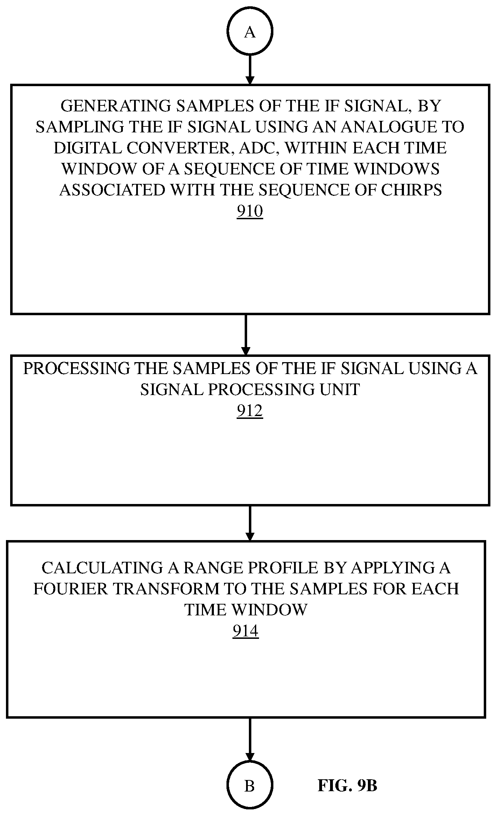

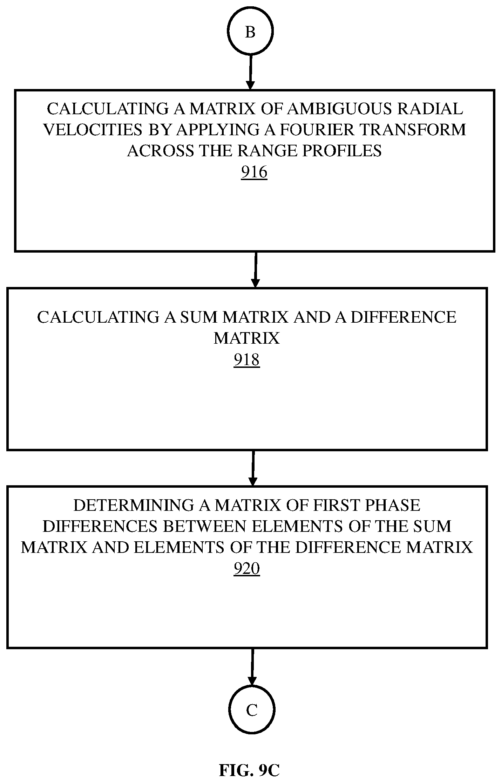

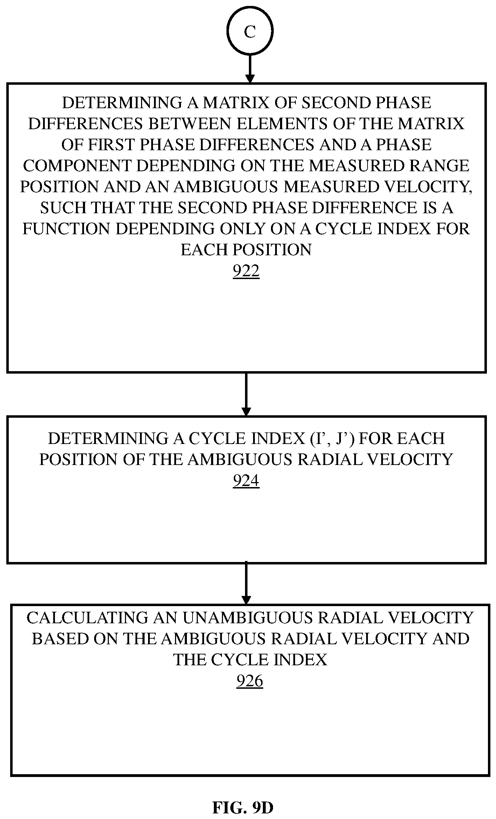

FIGS. 9A-9D are flow diagrams that illustrate a method for determining an unambiguous radial velocity in an automotive radar system in accordance with an implementation of the disclosure. At a step **902,** a transmission signal including a sequence of frequency-ramped chirps is generated using a waveform generator. The sequence of chirps includes a first time series of chirps interleaved with a second time series of chirps. At a step **904,** a radio wave is emitted by driving a transmission antenna with the transmission signal. At a step **906,** a reception signal is generated using a reception antenna in response to receiving a reflected radio wave. At a step **908,** the transmission signal and the reception signal are mixed to generate an intermediate frequency, IF, signal. At a step **910,** samples of the IF signal are generated, by sampling the IF signal using an analogue to digital converter, ADC, within each time window of a sequence of time windows associated with the sequence of chirps. The time windows have equidistant midpoints.

At a step **912,** the samples of the IF signal are processed using a signal processing unit. At a step **914,** a range profile is calculated by applying a Fourier transform to the samples for each time window. At a step **916,** a matrix of ambiguous radial velocities is calculated by applying a Fourier transform across the range profiles. The matrix of ambiguous radial velocities includes a first sub-matrix and a second sub-matrix corresponding respectively to lower and upper velocities. At a step **918,** a sum matrix and a difference matrix, are calculated respectively. The sum matrix and the difference matrix are a sum and a difference of the first and the second sub-matrix. At a step **920,** a matrix of first phase differences between elements of the sum matrix and elements of the difference matrix are determined. At a step **922,** a matrix of second phase differences between elements of the matrix of first phase differences and a phase component depending on the measured range position and an ambiguous measured velocity are determined, such that the second phase difference is a function depending only on a cycle index for each position. At a step **924,** a cycle index $n_{cyc}(I',J')$ is determined for each position of the ambiguous radial velocity. At a step **926,** an unambiguous radial velocity is calculated based on the ambiguous radial velocity and the cycle index.

The method estimates target velocity without an SNR loss, thereby improving the phase quality. The method improves target velocity estimation on a single radar scan, thereby reducing network latency especially in safety features of automotive such as emergency braking. The method estimates target velocity in a single scan over multiple channels, thereby enhancing robustness of the automotive radar apparatus. The method incorporates flexibility in waveform design and on a received signal recording. The method may detect possible errors during target velocity estimation and maintains a tracker for the possible errors.

Generating samples of the IF signal includes generating samples *RxTime(i,j)* of the IF signal, i=1,...N, j=1,...M, by sampling the IF signal within each time window W(i) of the sequence of time windows, *RxTime(i,j)* being the j-th sample in the i-th time window.

Processing the samples of the IF signal includes (i) calculating the range profile by, for each i from 1 to N, calculating a range profile *Range_SlowTime(i,J),* J=1,...,M, by applying a Fourier transform to the samples *RxTime(i,j),* j=1,...,M, and (ii) calculating ambiguous radial velocities by, for each J from 1 to M, calculating a matrix *RgVel(I,J),* I=1, ...,N, by applying the Fourier transform to the range profile *Range_SlowTime(i,J),* i=1,...,N, the first sub-matrix $RgVel_{S1}(I',J') =$ *RgVel(I',J'),* I'=1,...,N/2, J'=1,...,M, and the second sub-matrix $RgVel_{S2}(I',J') = RgVel\left(I' + \frac{N}{2}, J'\right)$, I'=1,...,N/2, J'=1,...,M.

Processing the samples of the IF signal comprises calculating the sum matrix $RgVel_{SUM}$ and the difference matrix $RgVel_{DIFF}$ such that:

$$RgVel_{SUM}(I',J') = RgVel_{S1}(I',J') + RgVel_{S2}(I',J')$$

and

$$RgVel_{DIFF}(I',J') = RgVel_{S1}(I',J') - RgVel_{S2}(I',J'),$$

$$I'=1,...,N/2, \ J'=1,...,M.$$

Processing the samples of the IF signal includes (i) determining the first phase differences *Phase(I',J'),* I'=1,...,N/2, J'=1,...,M, first phase difference *Phase(I',J')* being a phase difference between element $RgVel_{SUM}(I',J')$ of the sum matrix and element $RgVel_{DIFF}(I',J')$ of the difference matrix, and (ii) determining the second phase differences $Phase_{VelCylce}(I',J') = Phase(I',J')$ - $Phase_{known}(I',J'),$ I'=1,...,N/2, J'=1,...,M, and $Phase_{known}(I',J')$ is the phase component depending on the measured range position and the ambiguous measured velocity, such that $Phase_{known}(I',J')$ is a function of I' and J', $Phase_{known}(I',J') = f(I',J')$, and the second phase difference is a function $Phase_{VelCyIce}(I',J') = f(n_{cyc}(I',J'))$ depending only on the cycle index $n_{cyc}(I',J')$ for each I' J' position. The ambiguous velocity is estimated using the second phase difference, which only depends on the cycle index (a number of ambiguity cycles). The quality of this second phase difference can be improved by averaging all the available channels, thereby increasing robustness in estimating unambiguous velocity.

In a first of two alternatives according to the invention, a frequency-ramping slope is the same for the first time series of chirps and the second time series of chirps, and where a ramp time for the first and second time series, and an idle time between chirps is adjusted such that the windows sampled from the first time series of chirps include a different center frequency to the windows sampled from the second time series of chirps.

In a second one of the two alternatives according to the invention, a frequency-ramping slope is different for the first time series of chirps and the second time series of chirps, such that the windows sampled from the first time series of chirps includes a different center frequency to the windows sampled from the second time series of chirps, and where a size of the windows sampled is adjusted such that a constant bandwidth is sampled.

Optionally, the method further includes detecting one or more targets based on the calculated sum matrix or difference matrix. The first phase differences are determined for each target and averaged across one or more channels. The method may include estimating a direction of arrival for each detected target. The method can enhance the estimation of the unambiguous velocity in a single scan without impacting memory needs.

Optionally, the method further includes estimating a direction of arrival based on the calculated sum matrix and difference matrix using all channels. The method may include detecting one or more targets based on the direction of arrival estimated using the sum matrix or the difference matrix. Optionally, a potential error indication flag is raised based on a value of the second phase difference. A computer-readable medium that includes instructions that, when executed by a processor, cause the processor to perform the above method.

Although the disclosure and its advantages have been described in detail, it should be understood that various changes, substitutions, and alterations can be made herein without departing from the scope of the disclosure as defined by the appended claims.

## Claims

1. An automotive radar apparatus (100), comprising:

    a waveform generator (102), configured to generate a transmission signal including a sequence of frequency-ramped chirps, wherein the sequence of chirps includes a first time series of chirps interleaved with a second time series of chirps;
    a transmission antenna (104) configured to emit a radio wave in response to being driven by the transmission signal;
    a reception antenna (106) configured to generate a reception signal in response to receiving a reflected radio wave;
    a mixer (108) configured to generate an intermediate frequency, IF, signal by mixing the transmission signal with the reception signal;
    an analogue to digital converter, ADC, (110) configured to generate samples of the IF signal, by sampling the IF signal within each time window of a sequence of time windows associated with the sequence of chirps, wherein the time windows have equidistant midpoints;
    a signal processing unit (112) configured to:

        for each respective time window, calculate a range profile by applying a Fourier transform to the samples pertaining to the respective time window;
        calculate a matrix of ambiguous radial velocities by applying a Fourier transform across the range profiles, the matrix of ambiguous radial velocities comprising a first sub-matrix and a second sub-matrix corresponding respectively to lower and upper velocities;
        calculate a sum matrix and a difference matrix, the sum matrix and the difference matrix being a sum and a difference of the first and the second sub-matrix, respectively;
        determine a matrix of first phase differences between elements of the sum matrix and elements of the difference matrix;
        determine a matrix of second phase differences between elements of the matrix of first phase differences and a phase component depending on a measured range position and an ambiguous measured velocity, such that the second phase difference is a function depending only on a cycle index for each position;
        determine a cycle index $n_{cyc}(I',J')$ for each position of the ambiguous radial velocity; and

calculate an unambiguous radial velocity based on the ambiguous radial velocity and the cycle index;
wherein the ADC (110) is configured to generate samples $RxTime(i,j)$ of the IF signal, i=1, ...N, j=1, ...M, by sampling the IF signal within each time window W(i) of the sequence of time windows, $RxTime(i,j)$ being the j-th sample in the i-th time window;
wherein the signal processing unit (112) is configured to:

calculate the range profile by, for each i from 1 to N, calculating a range profile $Range\_SlowTime(i,J)$, J=1,...,M, by applying a Fourier transform to the samples $RxTime(i,j)$, j=1,...,M; and
calculate ambiguous radial velocities by, for each J from 1 to M, calculating a matrix $RgVel(I,J)$, I=1,...,N, by applying the Fourier transform to the range profile $Range\_SlowTime(i,J)$, i=1,...,N,

wherein the first sub-matrix $RgVel_{S1}(I',J') = RgVel(I',J')$, I'=1,...,N/2, J'=1,...,M, and the second sub-matrix

$$RgVel_{S2}(I',J') = RgVel\left(I' + \frac{N}{2}, J'\right),$$ I'=1,...,N/2, J'=1,...,M;

wherein the signal processing unit (112) is configured to calculate the sum matrix $RgVel_{SUM}$ and the difference matrix $RgVel_{DIFF}$ such that:

$$RgVel_{SUM}(I',J') = RgVel_{S1}(I',J') + RgVel_{S2}(I',J')$$

and

$$RgVel_{DIFF}(I',J') = RgVel_{S1}(I',J') - RgVel_{S2}(I',J'),$$

I'=1,...,N/2, J'=1,...,M;

wherein the signal processing unit (112) is configured to:
determine the first phase differences $Phase(I',J')$, I'=1,...,N/2, J'=1,...,M, first phase difference $Phase(I',J')$ being a phase difference between element $RgVel_{SUM}(I',J')$ of the sum matrix and element $RgVel_{DIFF}(I',J')$ of the difference matrix; and
determine the second phase differences $Phase_{VelVylce}(I',J') = Phase(I',J') - Phase_{known}(I',J')$, I'=1,...,N/2, J'=1,...,M, wherein $Phase_{known}(I',J')$ is the phase component depending on the measured range position and the ambiguous measured velocity, such that $Phase_{known}(I',J')$ is a function of I' and J', $Phase_{known}(I',J') = f(I',J')$, and the second phase difference is a function $Phase_{VelCylce}(I',J') = f(n_{cyc}(I',J'))$ depending only on the cycle index $n_{cyc}(I',J')$ for each I' J' position;
wherein one of the two following conditions apply:

a frequency-ramping slope is the same for the first time series of chirps and the second time series of chirps, and where a ramp time for the first and second time series, and an idle time between chirps is adjusted such that the windows sampled by the ADC (110) from the first time series of chirps include a different center frequency to the windows sampled from the second time series of chirps; or
a frequency-ramping slope is different for the first time series of chirps and the second time series of chirps, such that the windows sampled by the ADC (110) from the first time series of chirps includes a different center frequency to the windows sampled from the second time series of chirps, and where a size of the windows sampled by the ADC (110) is adjusted such that a constant bandwidth is sampled.

2. The apparatus (100) of claim 1, wherein the signal processing unit (112) is further configured to:

detect a plurality of targets based on the calculated sum matrix or difference matrix, where the first phase differences are determined for each target and averaged across a plurality of channels, and
estimate a direction of arrival for each detected target.

3. The apparatus (100) of any one of claims 1 to 2, wherein the signal processing unit (112) is further configured to:

estimate a direction of arrival based on the calculated sum matrix using all channels and a direction of arrival based on the calculated difference matrix using all channels, and
detect a plurality of targets based on the direction of arrival estimated using the sum matrix or the difference matrix.

4. The apparatus (100) of any preceding claim, wherein a potential error indication flag is raised based on a value of the second phase difference.

5. A method of determining an unambiguous radial velocity in an automotive radar system, comprising:

generating, using a waveform generator (102), a transmission signal including a sequence of frequency-ramped chirps, wherein the sequence of chirps includes a first time series of chirps interleaved with a second time series of chirps;

emitting a radio wave by driving a transmission antenna (104) with the transmission signal;

generating a reception signal using a reception antenna (106) in response to receiving a reflected radio wave;

mixing the transmission signal and the reception signal to generate an intermediate frequency, IF, signal;

generating samples of the IF signal, by sampling the IF signal using an analogue to digital converter, ADC, (110) within each time window of a sequence of time windows associated with the sequence of chirps, wherein the time windows have equidistant midpoints; and

processing the samples of the IF signal using a signal processing unit (112) to:

for each respective time window, calculate a range profile by applying a Fourier transform to the samples pertaining to the respective time window;

calculate a matrix of ambiguous radial velocities by applying a Fourier transform across the range profiles, the matrix of ambiguous radial velocities comprising a first sub-matrix and a second sub-matrix corresponding respectively to lower and upper velocities;

calculate a sum matrix and a difference matrix, the sum matrix and the difference matrix being a sum and a difference of the first and the second sub-matrix, respectively;

determine a matrix of first phase differences between elements of the sum matrix and elements of the difference matrix;

determine a matrix of second phase differences between elements of the matrix of first phase differences and a phase component depending on a measured range position and an ambiguous measured velocity, such that the second phase difference is a function depending only on a cycle index for each position;

determine a cycle index $n_{cyc}(I',J')$ for each position of the ambiguous radial velocity; and

calculate an unambiguous radial velocity based on the ambiguous radial velocity and the cycle index;

wherein generating samples of the IF signal comprises generating samples $RxTime(i,j)$ of the IF signal, i=1,...N, j=1,...M, by sampling the IF signal within each time window W(i) of the sequence of time windows, $RxTime(i,j)$ being the j-th sample in the i-th time window;

wherein processing the samples of the IF signal comprises:

calculating the range profile by, for each i from 1 to N, calculating a range profile $Range\_SlowTime(i,J)$, J=1,...,M, by applying a Fourier transform to the samples $RxTime(i,j)$, j=1,...,M; and

calculating ambiguous radial velocities by, for each J from 1 to M, calculating a matrix $RgVel(I,J)$, I=1,...,N, by applying the Fourier transform to the range profile $Range\_SlowTime(i,J)$, i=1,...,N,

wherein the first sub-matrix $RgVel_{S1}(I',J') = RgVel(I',J')$, I'=1,...,N/2, J'=1,...,M, and the second sub-matrix

$$RgVel_{S2}(I',J') = RgVel\left(I' + \frac{N}{2},J'\right), \text{ I'=1,...,N/2, J'=1,...,M;}$$

wherein processing the samples of the IF signal comprises calculating the sum matrix $RgVel_{SUM}$ and the difference matrix $RgVel_{DIFF}$ such that:

$$RgVel_{SUM}(I',J') = RgVel_{S1}(I',J') + RgVel_{S2}(I',J')$$

and

$$RgVel_{DIFF}(I',J') = RgVel_{S1}(I',J') - RgVel_{S2}(I',J'),$$

I'=1,...,N/2, J'=1,...,M;

wherein the processing the samples of the IF signal comprises:

determining the first phase differences $Phase(I',J')$, I'=1,...,N/2, J'=1,...,M, first phase difference $Phase(I',J')$ being a phase difference between element $RgVel_{SUM}(I',J')$ of the sum matrix and element $RgVel_{DIFF}(I',J')$ of the difference matrix; and

determining the second phase differences $Phase_{VelCylce}(I',J') = Phase(I',J') - Phase_{known}(I',J')$, I'=1,...,N/2, J'=1,...,M, wherein $Phase_{known}(I',J')$ is the phase component depending on the measured range position and the ambiguous measured velocity, such that $Phase_{known}(I',J')$ is a function of I' and J', $Phase_{known}(I',J') = f(I',J')$, and the second phase difference is a function $Phase_{VelCylce}(I',J') = f(n_{cyc}(I',J'))$ depending only on the cycle index $n_{cyc}(I',J')$ for each I' J' position;

wherein one of the two following conditions apply:

a frequency-ramping slope is the same for the first time series of chirps and the second time series of chirps, and where a ramp time for the first and second time series, and an idle time between chirps is adjusted such that the windows sampled by the ADC (110) from the first time series of chirps include a different center frequency to the windows sampled from the second time series of chirps; or

a frequency-ramping slope is different for the first time series of chirps and the second time series of chirps, such that the windows sampled by the ADC (110) from the first time series of chirps includes a different center frequency to the windows sampled from the second time series of chirps, and where a size of the windows sampled by the ADC (110) is adjusted such that a constant bandwidth is sampled.

## Patentansprüche

1. Radarvorrichtung für Kraftfahrzeuge (100), umfassend:

einen Wellenformgenerator (102), der zum Erzeugen eines Übertragungssignals konfiguriert ist, das eine Sequenz von Chirps mit rampenartig veränderter Frequenz beinhaltet, wobei die Sequenz von Chirps eine erste Zeitreihe von Chirps enthält, die mit einer zweiten Zeitreihe von Chirps verschachtelt ist;

eine Übertragungsantenne (104), die zum Aussenden einer Funkwelle als Reaktion auf ein Ansteuern durch das Übertragungssignal konfiguriert ist;

eine Empfangsantenne (106), die zum Erzeugen eines Empfangssignals als Reaktion auf das Empfangen einer reflektierten Funkwelle konfiguriert ist;

einen Mischer (108), der zum Erzeugen eines Zwischenfrequenzsignals (IF) durch Mischen des Übertragungssignals mit dem Empfangssignal konfiguriert ist;

einen Analog-Digital-Wandler (ADC) (110), der zum Erzeugen von Abtastwerten des IF-Signals durch Abtasten des IF-Signals innerhalb jedes Zeitfensters einer Sequenz von der Sequenz von Chirps zugeordneten Zeitfenstern konfiguriert ist, wobei die Zeitfenster äquidistante Mittelpunkte aufweisen;

eine Signalverarbeitungseinheit (112), die zu Folgendem konfiguriert ist:

Berechnen eines Bereichsprofils für jedes jeweilige Zeitfenster durch Anwenden einer Fourier-Transformation auf die zu dem jeweiligen Zeitfenster gehörenden Abtastwerte;

Berechnen einer Matrix mehrdeutiger Radialgeschwindigkeiten durch Anwenden einer Fourier-Transformation auf die Bereichsprofile, wobei die Matrix mehrdeutiger Radialgeschwindigkeiten eine erste Teilmatrix und eine zweite Teilmatrix umfasst, die jeweils der unteren und oberen Geschwindigkeit entsprechen;

Berechnen einer Summenmatrix und einer Differenzmatrix, wobei die Summenmatrix und die Differenzmatrix eine Summe bzw. eine Differenz der ersten und der zweiten Teilmatrix sind;

Bestimmen einer Matrix erster Phasendifferenzen zwischen Elementen der Summenmatrix und Elementen der Differenzmatrix;

Bestimmen einer Matrix zweiter Phasendifferenzen zwischen Elementen der Matrix erster Phasendifferenzen und einer Phasenkomponente, die von einer gemessenen Bereichsposition und einer mehrdeutigen gemessenen Geschwindigkeit abhängig ist, derart, dass die zweite Phasendifferenz eine Funktion ist, die nur von einem Zyklusindex für jede Position abhängig ist;

Bestimmen eines Zyklusindex $n_{cyc}(I',J')$ für jede Position der mehrdeutigen Radialgeschwindigkeit; und

Berechnen einer eindeutigen Radialgeschwindigkeit basierend auf der mehrdeutigen Radialgeschwindigkeit und dem Zyklusindex;

wobei der ADC (110) zum Erzeugen von Abtastwerten $RxTime(i,j)$ des IF-Signals durch Abtasten des IF-Signals innerhalb jedes Zeitfensters W(i) der Sequenz von Zeitfenstern konfiguriert ist, wobei i = 1, ..., N, j = 1, ..., M, wobei $RxTime(i,j)$ der j-te Abtastwert in dem i-ten Zeitfenster ist;

wobei die Signalverarbeitungseinheit (112) zu Folgendem konfiguriert ist:

Berechnen des Bereichsprofils durch Berechnen eines Bereichsprofils $Range\_SlowTime(i,J)$, wobei J = 1, ..., M, für jedes i von 1 bis N durch Anwenden einer Fourier-Transformation auf die Abtastwerte *RxTime(i,j)*, wobei j = 1, ..., M; und

Berechnen mehrdeutiger Radialgeschwindigkeiten durch Berechnen einer Matrix *RgVel(I,J)*, wobei I = 1, ..., N, für jedes J von 1 bis M durch Anwenden der Fourier-Transformation auf das Bereichsprofil *Range_SlowTime(i,J)*, wobei i = 1, ..., N,

wobei die erste Teilmatrix *RgVel$_{S1}$(I',J')* = *RgVel(I',J')*, wobei I' = 1, ..., N/2, J' = 1, ..., M, und die zweite

Teilmatrix $RgVel_{S2}(I',J') = RgVel\left(I' + \frac{N}{2}, J'\right)$, I'=1,...,N/2, J'=1,...,M;

wobei die Signalverarbeitungseinheit (112) derart zum Berechnen der Summenmatrix *RgVel$_{SUM}$* und der Differenzmatrix *RgVel$_{DIFF}$* konfiguriert ist, dass:

$$RgVel_{SUM}(I',J') = RgVel_{S1}(I',J') + RgVel_{S2}(I',J')$$

und

$$RgVel_{DIFF}(I',J') = RgVel_{S1}(I',J') - RgVel_{S2}(I',J'),$$

$$I' = 1, ..., N/2, J' = 1, ..., M;$$

wobei die Signalverarbeitungseinheit (112) zu Folgendem konfiguriert ist:

Bestimmen der ersten Phasendifferenzen *Phase(I',J')*, wobei I' = 1, ..., N/2, J' = 1, ..., M, wobei die erste Phasendifferenz *Phase(I',J')* eine Phasendifferenz zwischen dem Element *RgVel$_{SUM}$(I',J')* der Summenmatrix und dem Element *RgVel$_{DIFF}$(I',J')* der Differenzmatrix ist; und

Bestimmen der zweiten Phasendifferenzen *Phase$_{VelCylce}$(I',J')* = *Phase(I',J')* - *Phase$_{bekannt}$(I',J')*, wobei I' = 1, ..., N/2, J' = 1, ..., M, wobei *Phase$_{bekannt}$(I',J')* die Phasenkomponente ist, die von der gemessenen Bereichsposition und der mehrdeutig gemessenen Geschwindigkeit abhängig ist, derart, dass *Phase$_{bekannt}$(I',J')* eine Funktion von I' und J' ist, wobei *Phase$_{bekannt}$(I',J')* = *f(I',J')*, und die zweite Phasendifferenz eine Funktion *Phase$_{VelCylce}$(I',J')* = *f(n$_{cyc}$(I',J'))* ist, die nur von dem Zyklusindex *n$_{cyc}$(I',J')* für jede Position von I' J' abhängig ist;

wobei eine der beiden folgenden Bedingungen zutrifft:

eine Frequenzrampensteigung ist für die erste Zeitreihe von Chirps und die zweite Zeitreihe von Chirps gleich und wobei eine Rampenzeit für die erste und die zweite Zeitreihe und eine Leerlaufzeit zwischen Chirps derart eingestellt ist, dass die von dem ADC (110) in der ersten Zeitreihe von Chirps abgetasteten Fenster eine Mittenfrequenz beinhalten, die sich von der der in der zweiten Zeitreihe von Chirps abgetasteten Fenster unterscheidet; oder

eine Frequenzrampensteigung ist für die erste Zeitreihe von Chirps und die zweite Zeitreihe von Chirps derart unterschiedlich, dass die von dem ADC (110) in der ersten Zeitreihe von Chirps abgetasteten Fenster eine Mittenfrequenz beinhalten, die sich von der der in der zweiten Zeitreihe von Chirps abgetasteten Fenster unterscheidet, und wobei eine Größe der von dem ADC (110) abgetasteten Fenster derart eingestellt ist, dass eine konstante Bandbreite abgetastet wird.

2. Vorrichtung (100) nach Anspruch 1, wobei die Signalverarbeitungseinheit (112) ferner zu Folgendem konfiguriert ist:

Erfassen einer Vielzahl von Zielen basierend auf der berechneten Summenmatrix oder Differenzmatrix, wobei die ersten Phasendifferenzen für jedes Ziel bestimmt und über eine Vielzahl von Kanälen gemittelt werden, und Schätzen einer eine Ankunftsrichtung für jedes erfasste Ziel.

3. Vorrichtung (100) nach einem der Ansprüche 1 bis 2, wobei die Signalverarbeitungseinheit (112) ferner zu Folgendem konfiguriert ist:

Schätzen einer Ankunftsrichtung basierend auf der berechneten Summenmatrix unter Verwendung aller Kanäle und einer Ankunftsrichtung basieren auf der berechneten Differenzmatrix unter Verwendung aller Kanäle und Erfassen einer Vielzahl von Zielen basierend auf der unter Verwendung der Summenmatrix oder der Differenzmatrix geschätzten Ankunftsrichtung.

**4.** Vorrichtung (100) nach einem der vorhergehenden Ansprüche, wobei ein Flag zur Anzeige eines potenziellen Fehlers basierend auf einem Wert der zweiten Phasendifferenz gesetzt ist.

**5.** Verfahren zum Bestimmen einer eindeutigen Radialgeschwindigkeit in einem Radarsystem für Kraftfahrzeuge, umfassend:

Erzeugen eines Übertragungssignals, das eine Sequenz von Chirps mit rampenartig veränderter Frequenz beinhaltet, unter Verwendung eines Wellenformgenerators (102), wobei die Sequenz von Chirps eine erste Zeitreihe von Chirps enthält, die mit einer zweiten Zeitreihe von Chirps verschachtelt ist;
Aussenden einer Funkwelle durch Ansteuern einer Übertragungsantenne (104) mit dem Sendesignal;
Erzeugen eines Empfangssignals unter Verwendung einer Empfangsantenne (106) als Reaktion auf den Empfang einer reflektierten Funkwelle;
Mischen des Übertragungssignals mit dem Empfangssignal zum Erzeugen eines Zwischenfrequenzsignals, IF;
Erzeugen von Abtastwerten des IF-Signals durch Abtasten des IF-Signals innerhalb jedes Zeitfensters einer Sequenz von der Sequenz von Chirps zugeordneten Zeitfenstern unter Verwendung eines Analog-Digital-Wandlers, ADC, (110), wobei die Zeitfenster äquidistante Mittelpunkte aufweisen; und
Verarbeiten der Abtastwerte des IF-Signals unter Verwendung einer Signalverarbeitungseinheit (112) zum:

Berechnen eines Bereichsprofils für jedes jeweilige Zeitfenster durch Anwenden einer Fourier-Transformation auf die zu dem jeweiligen Zeitfenster gehörenden Abtastwerte;
Berechnen einer Matrix mehrdeutiger Radialgeschwindigkeiten durch Anwenden einer Fourier-Transformation auf die Bereichsprofile, wobei die Matrix mehrdeutiger Radialgeschwindigkeiten eine erste Teilmatrix und eine zweite Teilmatrix umfasst, die jeweils der unteren und oberen Geschwindigkeit entsprechen;
Berechnen einer Summenmatrix und einer Differenzmatrix, wobei die Summenmatrix und die Differenzmatrix eine Summe bzw. eine Differenz der ersten und der zweiten Teilmatrix sind;
Bestimmen einer Matrix erster Phasendifferenzen zwischen Elementen der Summenmatrix und Elementen der Differenzmatrix;
Bestimmen einer Matrix zweiter Phasendifferenzen zwischen Elementen der Matrix erster Phasendifferenzen und einer Phasenkomponente, die von einer gemessenen Bereichsposition und einer mehrdeutigen gemessenen Geschwindigkeit abhängig ist, derart, dass die zweite Phasendifferenz eine Funktion ist, die nur von einem Zyklusindex für jede Position abhängig ist;
Bestimmen eines Zyklusindex $n_{cyc}(I',J')$ für jede Position der mehrdeutigen Radialgeschwindigkeit; und
Berechnen einer eindeutigen Radialgeschwindigkeit basierend auf der mehrdeutigen Radialgeschwindigkeit und dem Zyklusindex;

wobei die erzeugten Abtastwerte des IF-Signals Erzeugen von Abtastwerten $RxTime(i,j)$ des IF-Signals, wobei i = 1, ..., N, j = 1, ..., M, durch Abtasten des IF-Signals innerhalb jedes Zeitfensters W(i) der Sequenz von Zeitfenstern umfassen, wobei $RxTime(i,j)$ der j-te Abtastwert in dem i-ten Zeitfenster ist;
wobei das Verarbeiten der Abtastwerte des IF-Signals Folgendes umfasst:

Berechnen des Bereichsprofils durch Berechnen eines Bereichsprofils $Range\_SlowTime(i,J)$, wobei J = 1, ..., M, für jedes i von 1 bis N durch Anwenden einer Fourier-Transformation auf die Abtastwerte $RxTime(i,j)$, wobei j = 1, ..., M; und
Berechnen mehrdeutiger Radialgeschwindigkeiten durch Berechnen einer Matrix $RgVel(I,J)$, wobei I = 1, ..., N, für jedes J von 1 bis M durch Anwenden der Fourier-Transformation auf das Bereichsprofil $Range\_SlowTime(i,J)$, wobei i = 1, ..., N,
wobei die erste Teilmatrix $RgVel_{S1}(I',J') = RgVel(I',J')$, wobei I' = 1, ..., N/2, J' = 1, ..., M, und die zweite Teilmatrix $RgVel_{S2}(I',J') = RgVel\left(I' + \frac{N}{2}, J'\right)$, I'=1,...,N/2, J'=1,...,M;
wobei das Verarbeiten der Abtastwerte des IF-Signals Berechnen der Summenmatrix $RgVel_{SUM}$ und der Differenzmatrix $RgVel_{DIFF}$ derart umfasst, dass:

$$RgVel_{SUM}(I',J') = RgVel_{S1}(I',J') + RgVel_{S2}(I',J')$$

und

$$RgVel_{DIFF}(I',J') = RgVel_{S1}(I',J') - RgVel_{S2}(I',J'),$$

$$I' = 1, \ldots, N/2, J' = 1,\ldots, M;$$

wobei das Verarbeiten der Abtastwerte des IF-Signals Folgendes umfasst:

Bestimmen der ersten Phasendifferenzen $Phase(I',J')$, wobei I' = 1, ..., N/2, J' = 1, ..., M, wobei die erste Phasendifferenz $Phase(I',J')$ eine Phasendifferenz zwischen dem Element $RgVel_{SUM}(I',J')$ der Summenmatrix und dem Element $RgVel_{DIFF}(I',J')$ der Differenzmatrix ist; und

Bestimmen der zweiten Phasendifferenzen $Phase_{VelCylce}(I',J') = Phase(I',J') - Phase_{bekannt}(I',J')$, wobei I' = 1, ..., N/2, J' = 1, ..., M, wobei $Phase_{bekannt}(I',J')$ die Phasenkomponente ist, die von der gemessenen Bereichsposition und der mehrdeutig gemessenen Geschwindigkeit abhängig ist, derart, dass $Phase_{bekannt}(I',J')$ eine Funktion von I' und J' ist, wobei $Phase_{bekannt}(I',J') = f(I',J')$, und die zweite Phasendifferenz eine Funktion $Phase_{VelCylce}(I',J') = f(n_{cyc}(I',J'))$ ist, die nur von dem Zyklusindex $n_{cyc}(I',J')$ für jede Position von I' J' abhängig ist;

wobei eine der beiden folgenden Bedingungen zutrifft:

eine Frequenzrampensteigung ist für die erste Zeitreihe von Chirps und die zweite Zeitreihe von Chirps gleich und wobei eine Rampenzeit für die erste und die zweite Zeitreihe und eine Leerlaufzeit zwischen Chirps derart eingestellt ist, dass die von dem ADC (110) in der ersten Zeitreihe von Chirps abgetasteten Fenster eine Mittenfrequenz beinhalten, die sich von der der in der zweiten Zeitreihe von Chirps abgetasteten Fenster unterscheidet; oder

eine Frequenzrampensteigung ist für die erste Zeitreihe von Chirps und die zweite Zeitreihe von Chirps derart unterschiedlich, dass die von dem ADC (110) in der ersten Zeitreihe von Chirps abgetasteten Fenster eine Mittenfrequenz beinhalten, die sich von der der in der zweiten Zeitreihe von Chirps abgetasteten Fenster unterscheidet, und wobei eine Größe der von dem ADC (110) abgetasteten Fenster derart eingestellt ist, dass eine konstante Bandbreite abgetastet wird.

## Revendications

1. Appareil radar automobile (100), comprenant :

un générateur de formes d'onde (102), configuré pour générer un signal de transmission comportant une séquence de fluctuations à rampe de fréquence, dans lequel la séquence de fluctuations comporte une première série temporelle de fluctuations entrelacés avec une seconde série temporelle de fluctuations ;

une antenne de transmission (104) configurée pour émettre une onde radio en réponse à l'excitation du signal de transmission ;

une antenne de réception (106) configurée pour générer un signal de réception en réponse à la réception d'une onde radio réfléchie ;

un mélangeur (108) configuré pour générer un signal de fréquence intermédiaire, IF, en mélangeant le signal d'émission avec le signal de réception ;

un convertisseur analogique-numérique, ADC, (110) configuré pour générer des échantillons du signal IF, en échantillonnant le signal IF dans chaque fenêtre temporelle d'une séquence de fenêtres temporelles associées à la séquence de fluctuations, dans lequel les fenêtres temporelles ont des points médians équidistants ;

une unité de traitement de signal (112) configurée pour :

pour chaque fenêtre temporelle respective, calculer un profil de plage en appliquant une transformée de Fourier aux échantillons appartenant à la fenêtre temporelle respective ;

calculer une matrice de vitesses radiales ambiguës en appliquant une transformée de Fourier sur les profils de plage, la matrice de vitesses radiales ambiguës comprenant une première sous-matrice et une seconde sous-matrice correspondant respectivement aux vitesses inférieure et supérieure ;

calculer une matrice de somme et une matrice de différence, la matrice de somme et la matrice de différence étant respectivement une somme et une différence de la première et de la seconde sous-matrice ;

déterminer une matrice de différences de première phase entre les éléments de la matrice de somme et les éléments de la matrice de différence ;

déterminer une matrice de différences de seconde phase entre des éléments de la matrice de différences de première phase et une composante de phase dépendant d'une position de plage mesurée et d'une vitesse mesurée ambiguë, de sorte que la différence de seconde phase est une fonction dépendant uniquement d'un indice de cycle pour chaque position ;

déterminer un indice de cycle $n_{cyc}(I',J')$ pour chaque position de la vitesse radiale ambiguë ; et

calculer une vitesse radiale non ambiguë sur la base de la vitesse radiale ambiguë et de l'indice de cycle ;

dans lequel l'ADC (110) est configuré pour générer des échantillons *ÉchRéception(i,j)* du signal IF, i = 1,...N, j = 1,...M, en échantillonnant le signal IF dans chaque fenêtre temporelle W(i) de la séquence de fenêtres temporelles, *ÉchRéception(i,j)* étant le j-ième échantillon dans la i-ième fenêtre temporelle ;

dans lequel l'unité de traitement de signal (112) est configurée pour :

calculer le profil de plage en calculant, pour chaque i de 1 à N, un profil de plage *Plage_TempsLent(i,J)*, J = 1,...,M, en appliquant une transformée de Fourier aux échantillons *ÉchRéception(i,j)*, j = 1,...,M ; et

calculer des vitesses radiales ambiguës en calculant, pour chaque J de 1 à M, une matrice *PlageVitesse* *(I,J)*, I = 1,...,N, en appliquant une transformée de Fourier au profil de plage *Plage_TempsLent(i,J)*, i = 1,...,N,

dans lequel la première sous-matrice *PlageVitesse$_{S1}$(I',J')* = *PlageVitesse(I',J')*, I' = 1,...,N/2, J' = 1,...,M, et la seconde sous-matrice

$$PlageVitesse_{S2}(I',J') = PlageVitesse\left(I' + \frac{N}{2}, J'\right), \text{ I'} = 1,...,N/2, \text{ J'} = 1,...,M$$

dans lequel l'unité de traitement de signal (112) est configurée pour calculer la matrice de somme *PlageVitesse$_{SOMME}$* et la matrice de différence *PlageVitesse$_{DIFF}$* de sorte que :

$$PlageVitesse_{SOMME}(I',J') = PlageVitesse_{S1}(I',J') + PlageVitesse_{S2}(I',J')$$

et

$$PlageVitesse_{DIFF}(I',J') = PlageVitesse_{S1}(I',J') - PlageVitesse_{S2}(I',J'),$$

$$I' = 1,...,N/2, \quad J' = 1,...,M ;$$

dans lequel l'unité de traitement de signal (112) est configurée pour :

déterminer les premières différences de phase *Phase(I',J')*, I' = 1,...,N/2, J' = 1,...,M, la première différence de phase *Phase(I',J')* étant une différence de phase entre l'élément *PlageVitesse$_{SOMME}$* *(I',J')* de la matrice de somme et l'élément *PlageVitesse$_{DIFF}$(I',J')* de la matrice de différence ; et

déterminer les secondes différences de phase *Phase-$_{VitCycle}$(I',J')* = *Phase(I',J')* - *Phase$_{connue}$(I',J')*, I' = 1,...,N/2, J' = 1, ..., M, dans lequel *Phase$_{connue}$(I',J')* est la composante de phase dépendant de la position de plage mesurée et de la vitesse mesurée ambiguë, telle que *Phase$_{connue}$(I',J')* est une fonction de I' et J' , *Phase$_{connue}$(I',J')* = *f(I',J')*, et la seconde différence de phase est une fonction *Phase$_{VitCycle}$(I',J')* = *f($n_{cyc}$(I',J'))* dépendant uniquement de l'indice de cycle $n_{cyc}(I',J')$ pour chaque position I' J' ;

dans lequel une des deux conditions suivantes s'applique :

une pente de rampe de fréquence est la même pour la première série temporelle de fluctuations et la seconde série temporelle de fluctuations, et où un temps de rampe pour la première et la seconde série temporelle, et un temps d'inactivité entre les fluctuations sont réglés de sorte que les fenêtres échantillonnées par le CAN (110) à partir de la première série temporelle de fluctuations comportent une fréquence centrale différente des fenêtres échantillonnées à partir de la seconde série temporelle de fluctuations ; ou

une pente de rampe de fréquence est différente pour la première série temporelle de fluctuations et la seconde série temporelle de fluctuations, de sorte que les fenêtres échantillonnées par le CAN (110) à partir de la première série temporelle de fluctuations comportent une fréquence centrale différente des fenêtres échantillonnées à partir de la seconde série temporelle de fluctuations, et où une taille des fenêtres échantillonnées par le CAN (110) est réglée de sorte qu'une largeur de bande constante est échantillonnée.

**2.** Appareil (100) selon la revendication 1, dans lequel l'unité de traitement de signal (112) est également configurée pour :

détecter une pluralité de cibles sur la base de la matrice de somme ou de différence calculée, où les premières différences de phase sont déterminées pour chaque cible et moyennées sur une pluralité de canaux, et estimer une direction d'arrivée pour chaque cible détectée.

**3.** Appareil (100) selon l'une quelconque des revendications 1 à 2, dans lequel l'unité de traitement de signal (112) est également configurée pour :

estimer une direction d'arrivée sur la base de la matrice de somme calculée à l'aide de tous les canaux et une direction d'arrivée sur la base de la matrice de différence calculée à l'aide de tous les canaux, et détecter une pluralité de cibles sur la base de la direction d'arrivée estimée à l'aide de la matrice de somme ou de la matrice de différence.

**4.** Appareil (100) selon une quelconque revendication précédente, dans lequel un indicateur d'indication d'erreur potentielle est déclenché sur la base d'une valeur de la seconde différence de phase.

**5.** Procédé de détermination d'une vitesse radiale non ambiguë dans un système radar automobile, comprenant :

la génération, à l'aide d'un générateur de formes d'onde (102), d'un signal de transmission comportant une séquence de fluctuations à rampe de fréquence, dans lequel la séquence de fluctuations comporte une première série temporelle de fluctuations entrelacés avec une seconde série temporelle de fluctuations ; l'émission d'une onde radio en pilotant une antenne de transmission (104) avec le signal de transmission ; la génération d'un signal de réception à l'aide d'une antenne de réception (106) en réponse à la réception d'une onde radio réfléchie ; le mélange du signal de transmission et du signal de réception pour générer un signal de fréquence intermédiaire, IF ; la génération d'échantillons du signal IF, en échantillonnant le signal IF à l'aide d'un convertisseur analogique-numérique, ADC, (110), dans chaque fenêtre temporelle d'une séquence de fenêtres temporelles associées à la séquence de fluctuations, dans lequel les fenêtres temporelles ont des points médians équidistants ; et le traitement des échantillons du signal IF à l'aide d'une unité de traitement de signal (112) pour :

pour chaque fenêtre temporelle respective, calculer un profil de plage en appliquant une transformée de Fourier aux échantillons appartenant à la fenêtre temporelle respective ; calculer une matrice de vitesses radiales ambiguës en appliquant une transformée de Fourier sur les profils de plage, la matrice de vitesses radiales ambiguës comprenant une première sous-matrice et une seconde sous-matrice correspondant respectivement aux vitesses inférieure et supérieure ; calculer une matrice de somme et une matrice de différence, la matrice de somme et la matrice de différence étant respectivement une somme et une différence de la première et de la seconde sous-matrice ; déterminer une matrice de différences de première phase entre les éléments de la matrice de somme et les éléments de la matrice de différence ; déterminer une matrice de différences de seconde phase entre des éléments de la matrice de différences de première phase et une composante de phase dépendant d'une position de plage mesurée et d'une vitesse mesurée ambiguë, de sorte que la différence de seconde phase est une fonction dépendant uniquement d'un indice de cycle pour chaque position ; déterminer un indice de cycle $n_{cyc}(I',J')$ pour chaque position de la vitesse radiale ambiguë ; et calculer une vitesse radiale non ambiguë sur la base de la vitesse radiale ambiguë et de l'indice de cycle ; dans lequel la génération d'échantillons du signal IF comprend la génération d'échantillons *ÉchRéception(i,j)* du signal IF, i = 1,...N, j = 1,...M, en échantillonnant le signal IF dans chaque fenêtre temporelle W(i) de la séquence de fenêtres temporelles, *ÉchRéception(i,j)* étant le j-ième échantillon dans la i-ième fenêtre temporelle ; dans lequel le traitement des échantillons du signal FI comprend :

le calcul du profil de plage en calculant, pour chaque i de 1 à N, un profil de plage *Plage_TempsLent(i,J),* J = 1,...,M, en appliquant une transformée de Fourier aux échantillons *ÉchRéception(i,j),* j = 1,...,M ; et le calcul de vitesses radiales ambiguës en calculant, pour chaque J de 1 à M, une matrice *PlageVitesse (I,J),* I = 1,...,N, en appliquant une transformée de Fourier au profil de plage *Plage_TempsLent(i,J),* i = 1, ..., N,

dans lequel la première sous-matrice $PlageVitesse_{S1}(I',J') = PlageVitesse(I',J')$, I' = 1,...,N/2, J' = 1,...,M, et la seconde sous-matrice

$$PlageVitesse_{S2}(I',J') = PlageVitesse\left(I' + \frac{N}{2}, J'\right), I' = 1,...,N/2, J' = 1,...,M$$

dans lequel le traitement des échantillons du signal IF comprend le calcul de la matrice de somme $PlageVitesse_{SOMME}$ et de la matrice de différence $PlageVitesse_{DIFF}$ de sorte que :

$$PlageVitesse_{SOMME}(I',J') = PlageVitesse_{S1}(I',J') + PlageVitesse_{S2}(I',J')$$

et

$$PlageVitesse_{DIFF}(I',J') = PlageVitesse_{S1}(I',J') - PlageVitesse_{S2}(I',J'),$$

$$I' = 1,...,N/2, \quad J' = 1,...,M ;$$

dans lequel le traitement des échantillons du signal IF comprend :

la détermination des premières différences de phase $Phase(I',J')$, I' = 1,...,N/2, J' = 1,...,M, la première différence de phase $Phase(I',J')$ étant une différence de phase entre l'élément $PlageVitesse_{SOMME}(I',J')$ de la matrice de somme et l'élément $PlageVitesse_{DIFF}(I',J')$ de la matrice de différence ; et

la détermination des secondes différences de phase $Phase_{VitCycle}(I',J') = Phase(I',J') - Phase_{connue}(I',J')$, I' = 1,...,N/2, J' = 1, ..., M, dans lequel $Phase_{connue}(I',J')$ est la composante de phase dépendant de la position de plage mesurée et de la vitesse mesurée ambiguë, telle que $Phase_{connue}(I',J')$ est une fonction de I' et J', $Phase_{connue}(I',J') = f(I',J')$, et la seconde différence de phase est une fonction $Phase_{VitCycle}(I',J') = f(n_{cyc}(I',J'))$ dépendant uniquement de l'indice de cycle $n_{cyc}(I',J')$ pour chaque position I' J' ;

dans lequel une des deux conditions suivantes s'applique :

une pente de rampe de fréquence est la même pour la première série temporelle de fluctuations et la seconde série temporelle de fluctuations, et où un temps de rampe pour la première et la seconde série temporelle, et un temps d'inactivité entre les fluctuations sont réglés de sorte que les fenêtres échantillonnées par le CAN (110) à partir de la première série temporelle de fluctuations comportent une fréquence centrale différente des fenêtres échantillonnées à partir de la seconde série temporelle de fluctuations ; ou

une pente de rampe de fréquence est différente pour la première série temporelle de fluctuations et la seconde série temporelle de fluctuations, de sorte que les fenêtres échantillonnées par le CAN (110) à partir de la première série temporelle de fluctuations comportent une fréquence centrale différente des fenêtres échantillonnées à partir de la seconde série temporelle de fluctuations, et où une taille des fenêtres échantillonnées par le CAN (110) est réglée de sorte qu'une largeur de bande constante est échantillonnée.

**FIG. 1**

**FIG. 2**

**FIG. 3**

**FIG. 4**

**FIG. 5**

**FIG. 6**

```
┌─────────────────────────────────────────┐
│         RANGE FOURIER TRANSFORM          │
│                  702                     │
└─────────────────────────────────────────┘
                     │
                     ▼
┌─────────────────────────────────────────┐
│        DOPPLER FOURIER TRANSFORM         │
│                  704                     │
└─────────────────────────────────────────┘
                     │
                     ▼
┌─────────────────────────────────────────┐
│          GENERATE A SUB-MATRIX           │
│                  706                     │
└─────────────────────────────────────────┘
                     │
                     ▼
┌─────────────────────────────────────────┐
│    SUM AND SUBTRACT GENERATED SUB-MATRIX │
│                  708                     │
└─────────────────────────────────────────┘
                     │
                     ▼
┌─────────────────────────────────────────┐
│      DETECT TARGET USING ALL SUMS OR     │
│              SUBSTRACTIONS               │
│                  710                     │
└─────────────────────────────────────────┘
                     │
                     ▼
┌─────────────────────────────────────────┐
│    CALCULATE AN INTERFEROMETRIC PHASE FOR│
│             DETECTED TARGETS             │
│                  712                     │
└─────────────────────────────────────────┘
                     │
                     ▼
┌─────────────────────────────────────────┐
│  ESTIMATE SUB-SPECTRUM CYCLE OR UNAMBIGUOUS│
│                VELOCITY                  │
│                  714                     │
└─────────────────────────────────────────┘
                     │
                     ▼
┌─────────────────────────────────────────┐
│        ESTIMATE DIRECTION OF ARRIVAL     │
│                  716                     │
└─────────────────────────────────────────┘
```

**FIG. 7**

```
┌─────────────────────────────────────────────┐
│           RANGE FOURIER TRANSFORM            │
│                     802                      │
└─────────────────────────────────────────────┘
                       │
                       ▼
┌─────────────────────────────────────────────┐
│          DOPPLER FOURIER TRANSFORM           │
│                     804                      │
└─────────────────────────────────────────────┘
                       │
                       ▼
┌─────────────────────────────────────────────┐
│            GENERATE A SUB-MATRIX             │
│                     806                      │
└─────────────────────────────────────────────┘
                       │
                       ▼
┌─────────────────────────────────────────────┐
│      SUM AND SUBTRACT GENERATED SUB-MATRIX   │
│                     808                      │
└─────────────────────────────────────────────┘
                       │
                       ▼
┌─────────────────────────────────────────────┐
│       DIRECTION OF ARRIVAL OVER ALL SUMS OR  │
│                 SUBSTRACTIONS                │
│                     810                      │
└─────────────────────────────────────────────┘
                       │
                       ▼
┌─────────────────────────────────────────────┐
│    DETECT TARGET OVER ALL SUMS OR SUBTRACTIONS│
│                     812                      │
└─────────────────────────────────────────────┘
                       │
                       ▼
┌─────────────────────────────────────────────┐
│     CALCULATE AN INTERFEROMETRIC PHASE FOR   │
│               DETECTED TARGETS               │
│                     814                      │
└─────────────────────────────────────────────┘
                       │
                       ▼
┌─────────────────────────────────────────────┐
│  ESTIMATE SUB-SPECTRUM CYCLE OR UNAMBIGUOUS  │
│                  VELOCITY                    │
│                     816                      │
└─────────────────────────────────────────────┘
```

**FIG. 8**

GENERATING, USING A WAVEFORM GENERATOR, A
TRANSMISSION SIGNAL INCLUDING A SEQUENCE OF
FREQUENCY-RAMPED CHIRPS
902

EMITTING A RADIO WAVE BY DRIVING A
TRANSMISSION ANTENNA WITH THE TRANSMISSION
SIGNAL
904

GENERATING A RECEPTION SIGNAL USING A
RECEPTION ANTENNA IN RESPONSE TO RECEIVING A
REFLECTED RADIO WAVE
906

MIXING THE TRANSMISSION SIGNAL AND A
RECEPTION SIGNAL TO GENERATE AN INTERMEDIATE
FREQUENCY, IF, SIGNAL
908

A

**FIG. 9A**

GENERATING SAMPLES OF THE IF SIGNAL, BY
SAMPLING THE IF SIGNAL USING AN ANALOGUE TO
DIGITAL CONVERTER, ADC, WITHIN EACH TIME
WINDOW OF A SEQUENCE OF TIME WINDOWS
ASSOCIATED WITH THE SEQUENCE OF CHIRPS
910

PROCESSING THE SAMPLES OF THE IF SIGNAL USING A
SIGNAL PROCESSING UNIT
912

CALCULATING A RANGE PROFILE BY APPLYING A
FOURIER TRANSFORM TO THE SAMPLES FOR EACH
TIME WINDOW
914

**FIG. 9B**

B

CALCULATING A MATRIX OF AMBIGUOUS RADIAL
VELOCITIES BY APPLYING A FOURIER TRANSFORM
ACROSS THE RANGE PROFILES
916

CALCULATING A SUM MATRIX AND A DIFFERENCE
MATRIX
918

DETERMINING A MATRIX OF FIRST PHASE
DIFFERENCES BETWEEN ELEMENTS OF THE SUM
MATRIX AND ELEMENTS OF THE DIFFERENCE MATRIX
920

C

FIG. 9C

C

DETERMINING A MATRIX OF SECOND PHASE
DIFFERENCES BETWEEN ELEMENTS OF THE MATRIX
OF FIRST PHASE DIFFERENCES AND A PHASE
COMPONENT DEPENDING ON THE MEASURED RANGE
POSITION AND AN AMBIGUOUS MEASURED VELOCITY,
SUCH THAT THE SECOND PHASE DIFFERENCE IS A
FUNCTION DEPENDING ONLY ON A CYCLE INDEX FOR
EACH POSITION
922

DETERMINING A CYCLE INDEX (I', J') FOR EACH
POSITION OF THE AMBIGUOUS RADIAL VELOCITY
924

CALCULATING AN UNAMBIGUOUS RADIAL VELOCITY
BASED ON THE AMBIGUOUS RADIAL VELOCITY AND
THE CYCLE INDEX
926

**FIG. 9D**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004150552 A1

**Non-patent literature cited in the description**

- **H. ROHLING et al.** New radar waveform based on a chirp sequence. *International Radar Conference*, 2014

- **Y. WANG et al.** *Jittered chirp sequence waveform in combination with CS-based unambiguous Doppler processing for automative frequency-modulated continuous wave radar*